# EUROPEAN PATENT SPECIFICATION

(11) **EP 1 459 585 B1**
(45) Date of publication and mention of the grant of the patent: **23.04.2008**
(21) Application number: 02791137.9
(22) Date of filing: 22.11.2002
(51) Int. Cl.: H04Q 7/38, H04M 17/00

(54) **A METHOD AND SYSTEM FOR FACILITATING SERVICE DELIVERY TO USERS IN A COMMUNICATIONS SYSTEM**
VERFAHREN UND SYSTEM ZUR ERMÖGLICHUNG EINER DIENSTABLIEFERUNG AN BENUTZER IN EINEM KOMMUNIKATIONSSYSTEM
PROCEDE ET SYSTEME POUR FACILITER LA DESSERTE D'USAGERS DANS UN SYSTEME DE COMMUNICATIONS

(30) Priority: 28.12.2001 SE 0104465
(43) Date of publication of application: 22.09.2004
(73) Proprietor: TELEFONAKTIEBOLAGET LM ERICSSON (publ), 164 83 Stockholm (SE)
(72) Inventor: TÖRNKVIST, Robert, S-374 40 Karlshamn (SE)
(74) Representative: Norin, Klas
(86) International application number: PCT/SE2002/002148
(87) International publication number: WO 2003/061324

(56) References cited:
- WO-A1-00/02374
- WO-A1-01/47311
- WO-A1-01/76296
- US-A- 6 122 510

## Description

### Field of the Invention

The present invention relates to a method and system of facilitating service delivery to users in a communications system, and more particularly to a method and system of facilitating service delivery to a first user registered with a home network for a particular service having an associated announcement accessible to a service subsystem of said home network in a communications system while the user is roaming in a visited network or PLMN of the communications system.

### Description of the Prior Art

Today's mobile telephone communications networks such as GSM, public switched telecommunications networks (PSTN), ISDN, ATM, Internet etc. provide many different more or less sophisticated tele and data communications services for users and providers, regional as well as world-wide. The demands for increased benefit of the network operator, the service provider, and the service subscriber have brought forth the concept of Intelligent Network (IN). An Intelligent Network is a telecommunications concept that meets the market demand, from network operators and service providers, for advanced services within the existing telephony network. IN is a network architecture connected to the basic network (for instance a fixed or mobile network), enabling faster, easier, and more flexible service implementation and service control. This is effected by transferring the service control from the switching centre to a separate functional IN unit. Thus, the service become independent of the basic network operation, and the basic network structure and software need not be changed when services are altered or added. Examples of such services are Premium Rate calls, Mobile Virtual Private Network, Prepaid charging and Personal Number. Different network providers offer different sets of services including both charged and free services.

A number of standard services are available in every GSM network. There are, however, additional non-standard services that have to be agreed on between operators if these services would be available to the users even when they are roaming outside their home network or PLMN (public land mobile network.

Billing for usage of the networks and their associated services is achieved by means of a payment mechanism. Both post-paid and pre-paid systems (PPS) are used. In prior art pre-paid systems it is common practice to load an account with money and then deduct the account balance due to subscriber usage.

In pre-paid as well as post-paid systems it is sometimes necessary to send announcements to users (subscribers) utilising or trying to utilise services delivered by the system. For normal voice calls there are a number of types of announcements, such as Call setup, In call and Call cut-off announcements. "Your account is too low for the call" is one example of a service delivered by the communications system to a user in a pre-paid system, when a user tries to make a call without enough money on its account for the call. During an ongoing call the user may receive the following message "The call will be disconnected due to lack of money". Another example of an announcement is "Your not allowed to call this number". These and several other announcements can be sent to users in communications systems or networks. The announcements are not necessarily voice or text announcements, but also tone or data announcements.

At least some of the announcements have to be provided to users of services performed by its home network, both when the user is within its home network and when the user is roaming outside its home network. There are some important aspects to consider particularly in the second case, i.e. when the user is roaming. One aspect is the problem of playing the correct announcement with respect to the action performed by the home network. Another aspect is that, in case of a voice or text announcement and that the user is roaming abroad within the cover of a visited network or PLMN providing announcements in a foreign language, the announcement has to be played or reproduced in a language suitable for the user.

Another problem is to reproduce compound announcements, including a fixed part and a variable part correctly in the language at hand in the country in the network into which the user is roaming. One example of this is an announcement like "You have 72 SEK on your account for usage", wherein 72 SEK is the variable part. If the text announcement is a standard announcement the visited network has a corresponding announcement in the language of the visited country. However, a problem may sometimes arise in the translation of the variable part, "72" in this case. "72" should not be read "seven two" but rather "seventy two" in english and "zwei und siebzig" in german rather than "siebzig zwei". The problem is relevant even in other languages and with other variable parts.

The first aspects are addressed by WO98/37685, which discloses a method of delivering announcements to a user of a communications system when roaming in a network other than the user's home network. A service subsystem of the user's home network is caused to pass an announcement - associated with a particular service registered for the user in the home network - to a service subsystem of the visited network. The announcement is transferred to media delivery means of the MSC (mobile switching centre) of the service subsystem of the visited network over a data network, such as SS7 or the Internet. Then, the announcement is delivered from the media delivery means of the visited network, over a bearer connection of the visited network, to the user.

A disadvantage with the method of WO98/37685 is that the numbering and language of announcements have to be co-ordinated between the operators of the home and visited networks. This can be a huge problem if agreements should be reached and co-ordination should be made between operators around the world.

The 3G TS 23.078 release of the Customised Applications for Mobile network Enhanced Logic (CAMEL) Phase 3 - Stage 2 provides guidelines for implementation of a method of playing a "correct" announcement with respect to the action performed by the home network, and playing it in a suitable language for the user, even when the user is roaming in another network than its home network. This method of providing the "correct" announcement in a suitable language is achieved by establishing a temporary connection from the user in the visited network to the home network for announcement delivery, when a connection is initiated from a first user to a second user registered with any network of the communications system. A service subsystem of the home network delivers the announcement to the first user and the temporary connection has to be disconnected before the initiated call is set up between the first and second user.

This CAMEL solution results in increased transmission cost, two different calls have to be set up, one for the announcement and another between the first and second user. Since the user is not aware of this extra connection to the home network, it can be difficult to get paid for that extra temporary connection from the user. Another disadvantage with this CAMEL solution is that the call set-up time is increased, because the two "calls" have to be set up.

US-A-6 122 510 discloses a method of providing services to mobile stations in a mobile communications system. A home network database stores subscriber records for mobile communication units subscribing to basic telephony services from the home mobile communications network. The home network database also stores information relating to one or more network-specific services being offered in the home or the visiting network. At least some of the subscriber records in the home database include a flag indicating whether the mobile communications unit corresponding to that subscriber record is to receive the network-specific service. When a mobile unit registers or performs a location update procedure, the network-specific service information is transferred from that mobile's home network database to a node currently servicing that mobile communications unit if the flag is set in that mobile subscriber's database record.

WO-A-01 47311 discloses a system for mobile telecommunication, comprising a first mobile network (KTm), connected to a first nonmobile network (KTv) having routing means (X). Terminals connected to the nonmobile network may set up a connection with mobile terminals having the first or a second mobile network as their home network. A mirror register (MLR), connected to the routing means in the nonmobile network, is used to record a copy of the user profile transferred by the HLR register of the home network of a roaming mobile terminal to the VLR register of the non-home network. The user profile stored in the mirror register in this manner is then used - together with the VLR - to directly drive the routing means X of the nonmobile network KTv, as a result of which the routing path is considerably shortened.

WO-A-00 02374 discloses a method and arrangement for paying through a cellular telecommunications system. The cellular telecommunications system comprises a user account providing a balance to a user and accessible through the telecommunications system, wherein the balance on the user account is deductible on request, and a switching centre through which the user is currently communicating by means of a mobile station. The method comprises a step of transmitting a balance information from the user account to the database of the switching centre the user is currently communicating with.

WO-A-01 76296 discloses a method and system for providing supplementary services for a subscriber roaming from a first to a second network. The second network receives information on supplementary services during home location updating, and emulates the subscriber services. Therefore, the roaming subscriber is provided with the same supplementary services irrespective of roaming to another network.

### Summary of the invention

It is an object of the present invention to provide an improved method of facilitating service delivery to a first user registered with a home network or PLMN for a particular service having an associated announcement accessible to a service subsystem of said home network in a communications system while the user is roaming in a visited network or PLMN of the communications system, that overcomes the problem and disadvantages set forth above in connection with the prior art.

This object is achieved by a method according to claim 1.

A more specific object of the invention is to provide a data processing system and associated software for working the method of facilitating service delivery and associated announcements according to the invention.

This is achieved by a data processing system according to claim 13.

An advantage of the present invention is that since a majority of calls from mobile phones roaming in a visited network is to the user's home network, the user will have a shorter average call set-up time. It is also more cost effective for the operator since the number of call setups will be decreased. The present invention will have a particular value in prepaid charging systems, because prepaid is a service which frequently makes use of announcements.

### Brief Description of the Drawings

In order to explain the invention in more detail and the advantages and features of the invention, a preferred embodiment will be described in detail below, reference being made to the accompanying drawings, in which
FIG 1 is a schematical view of a part of a cellular mobile telephone network,
FIG 2 is a schematical view of an intelligent network (IN) implementation of the network in FIG 1,
FIG 3 is a schematical view of a part of a cellular mobile telephone network, including a system of facilitating service announcement delivery according to the invention to users in a communications system,
FIG 4 is a schematical view of an intelligent network implementation of the network in FIG 3,
FIG 5 is a signalling diagram illustrating an embodiment of the method according to the invention,
FIG 6 is a flow chart of a first part of the method of facilitating service delivery users in a communications system,
FIG 7 is a flow chart of a second part of the method of facilitating service delivery users in a communications system,
FIG 8 is a flow chart of a third part of the method of facilitating service delivery users in a communications system, and
FIG 9 is a flow chart of a fourth part of the method of facilitating service delivery users in a communications system.

### Detailed Description of the Invention

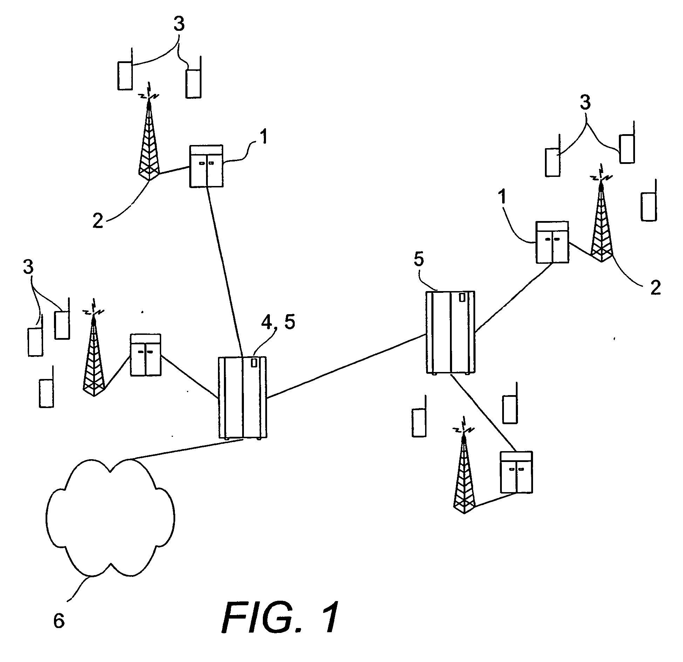

With reference to FIG 1, a cellular mobile telephone network architecture is shown, which is a service providing network such as an intelligent network (IN) facilitating service delivery according to the invention to users in a communications system.

Cellular telephone service, such as GSM, involves the subdivision of a service area into a number of smaller cells. Each cell requires a base station (BSS) 1 and an antenna 2. The base station 1 performs the switching function as well as the tracking of mobile telephone users. A gateway mobile services switching centre (GMSC) 4 or only mobile services switching centre (MSC) 5 provides the network with specific data about individual mobile phones 1 and operates as an interface towards other networks such as other PLMNs, ISDN or the public switched network (PSTN) 6 in the communications system. The (G)MSC 4 and 5 comprises a data processing system, including a computer processor for processing data, and storage means connected to the computer processor for storing data on a storage medium.

Cellular systems are based on both analogue and digital transmission. Digital cellular systems provide the best quality with the least amount of bandwidth. Different kinds of principles such as TDMA or CDMA technologies are used for digital cellular systems, such as GSM.

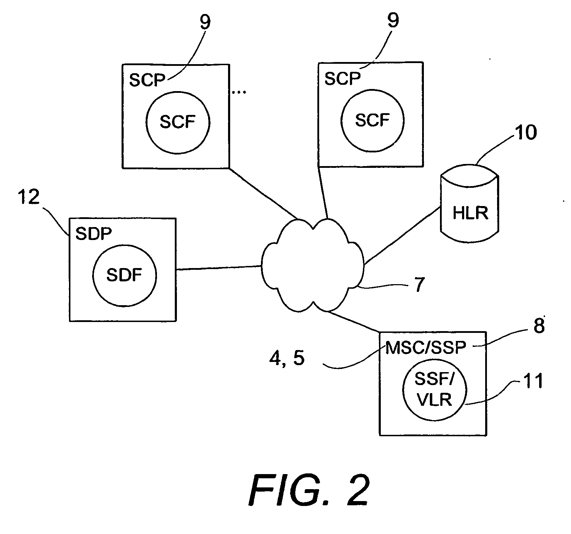

Referring to FIG 2, there is shown a schematical view of an intelligent network implementation of the network in FIG 1. The intelligent network IN has a signalling network, which performs message switching between network elements. In this embodiment of the invention, a specific type of signalling protocol, signalling system 7 (SS7), is used for the exchange of information messages and carries many types of information elements, which are useful for intelligent network services. However, SS7 is only an example and the signalling protocol can be another protocol such as the Internet Protocol (IP) etc. Additionally, the intelligent network includes a service switching point (SSP) 8 located in the (G)MSC 4, 5. The SSP 8 detects events indicating a call requiring IN and after this triggering, it suspends call processing and starts a series of transactions with a service control point (SCP) 9. The SCP 9 is a real-time database system that, based on a query from the SSP 8, performs subscriber- or application-specific service logic, controlling the call set-up and call flow. A home location register (HLR) 10 stores the identity and user data of all the subscribers belonging to the area of the related (G)MSC 4, 5. The HLR 10 provides the (G)MSC 4, 5 with the necessary subscriber data when a call is coming from a public switched network (PSTN) 6, an ISDN network, the Internet etc. A visitors location register (VLR) 11 contains relevant data of all mobiles currently located or roaming within a serving (G)MSC 4, 5. The VLR 11 has to support the (G)MSC 4, 5 during call establishment when a call is coming from a mobile telephone 1. A service data point (SDP) 12 is a database containing data service class data and tariff data. Rating and charging analysis is also handled in the SDP 12, in this embodiment.

Before a mobile telephone user can make a phone call or use another service provided by the network he/she has to be either a pre-paid or post-paid "subscriber".

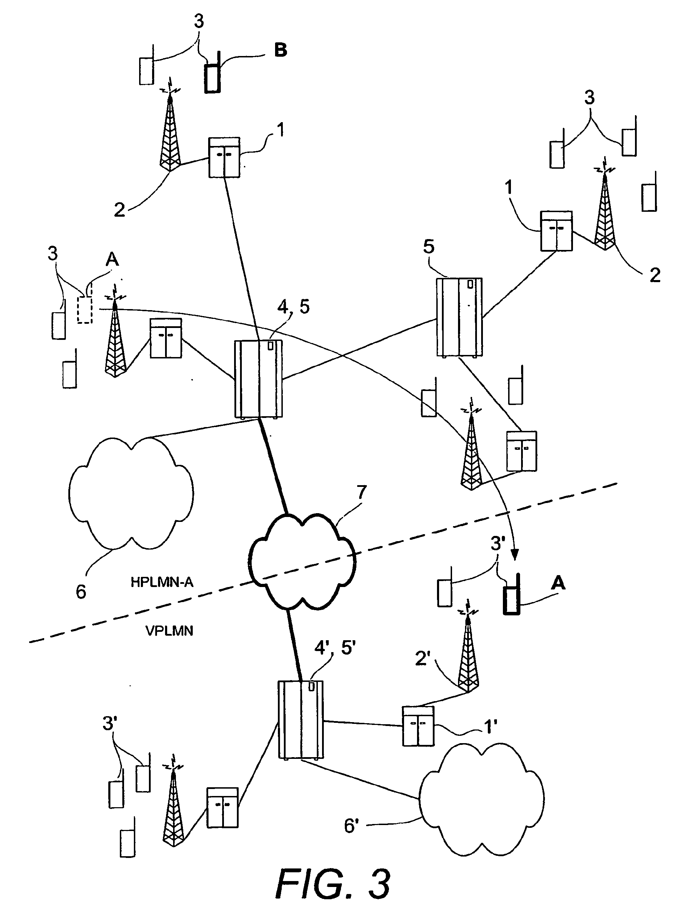

FIG 3 is a schematical view of a part of a cellular mobile telephone network, including a system of facilitating service announcement delivery according to the invention to users in a communications system. The different parts or modules numbered 1-6 described in connection with FIG 1, form part of the cellular mobile telephone home network or home PLMN (public land mobile network) in a first country, for example Sweden. Corresponding parts or modules in FIG 2 are numbered 1'-6', and form part of the cellular mobile telephone network or visited PLMN in a second country, for example Italy.

A user A of a mobile phone in FIG 3 is connected to an operator and is a subscriber to a mobile network, its home network or HPLMN-A. This embodiment of the invention illustrates a case of a user being a pre-paid subscriber, but it is not limited thereto. The user is registered for one or more services provided by the home network. Some of the services have associated announcements for delivery to users at suitable occasions. In a pre-paid as well as post-paid systems it is sometimes necessary to send announcements to users (subscribers) utilising or trying to utilise services delivered by the system. In a pre-paid system announcements like "Your account is too low for the call", when a user tries to make a call with not enough money on the account for the call, or "The call will be disconnected due to lack of money" during an ongoing call are possible. These and several other announcements can be sent to users in communications systems or networks and should be send in a language suitable for the user. The announcements are not necessarily voice or text announcements, but also tone or data announcements.

In this embodiment of the invention there are three kinds of announcements available for normal voice calls, namely Call setup, In Call, and Call cut-off announcements. There are also announcements for a refill call or balance inquiry via the IVR (Interactive Voice Response).
- Call setup announcement: Call setup announcements are announcements played before the call is set up towards the called party or as a result of the calling party being barred from reaching the called destination.
- In Call announcement: The service plays an In call announcement at a configurable time before call cut-off due to account depletion and is normally realised as a tone.
- Call cut-off announcement: The Call cut-off announcement is played before the disconnection of a call. It is used to inform the subscriber that there is not enough money on the account for the call to continue.
- Announcements via IVR: By giving announcements and voice prompts to the subscriber, and receiving DTMF in response, the IVR helps the caller to refill their account or to do balance inquiry.

Text messages providing the subscriber with information on their account are sent by means of Unstructured Supplementary Services Data (USSD). There are two messages that can be sent to the end user, balance inquiry information and notification at the end of call in this embodiment.
- Balance inquiry: It is possible for a subscriber to get the account balance presented on the display of the mobile by sending a USSD message including a service code.
- Notification at end of call: As an optional feature offered on a Service Class Basis, PPS can send the cost of the last call and the new account balance after each charged call or event.

When a user, for example the user A in FIG 3, roams from its home network in Sweden to a visited network or PLMN in Italy, standard services for which the user has registered in its home network are still available in the visited network. The roaming is illustrated by an arc shaped arrow from a dashed lined phone A in the home network area to a bold lined phone A in the visited network in FIG 3. The bold dashed line in the middle of FIG 3 illustrates the "borderline" between the home and visited network.

The "cloud" on the borderline represents a transmission network or networks 7 for signal transmission (SS7) and speech and/or data transmission. For example, the GSM system uses TDMA for speech transmission. The signal and speech transmission can use a common network or separate networks.

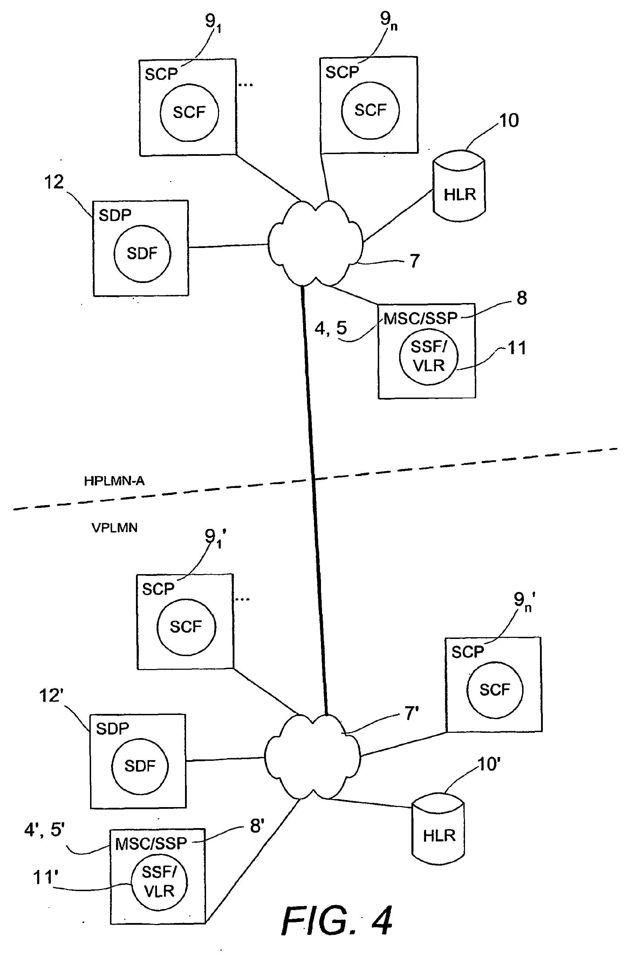

Referring no to FIG 4, there is shown a schematical view of an intelligent network implementation of a part of the network in FIG 3. As mentioned above, the intelligent network IN has a signalling network, which performs message switching between network elements. In this embodiment of the invention, the specific type of signalling protocol, signalling system SS7, which is useful for intelligent network services, is used for the exchange of information messages and carries many types of information elements within the home network as well as over the "borderline" to/from the visited network. However, SS7 is only an example and the signalling protocol can be another protocol such as the Internet Protocol (IP). The different parts or modules numbered 4-12 also described in connection with FIG 2, form part of the signalling network of the home PLMN (public land mobile network). Corresponding parts or modules in FIG 4 are numbered 4'-12', and form part of the signalling network or visited PLMN.

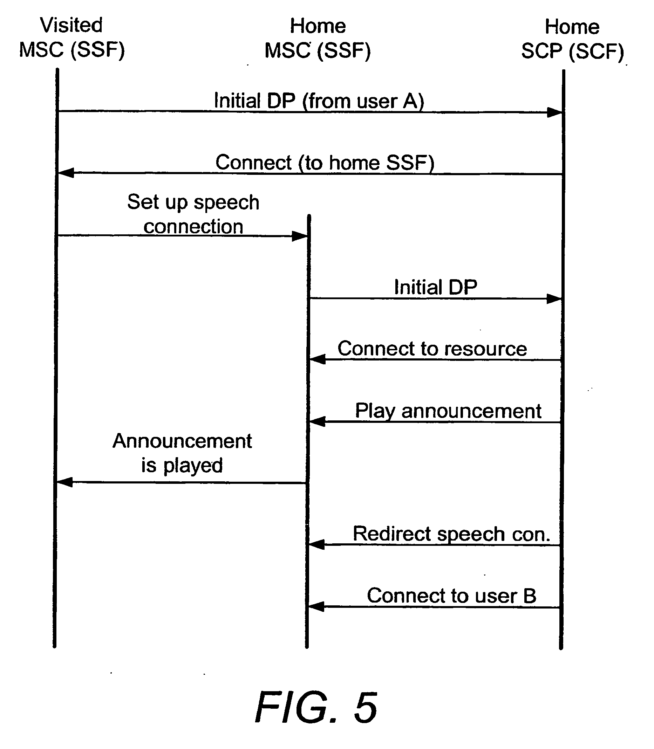

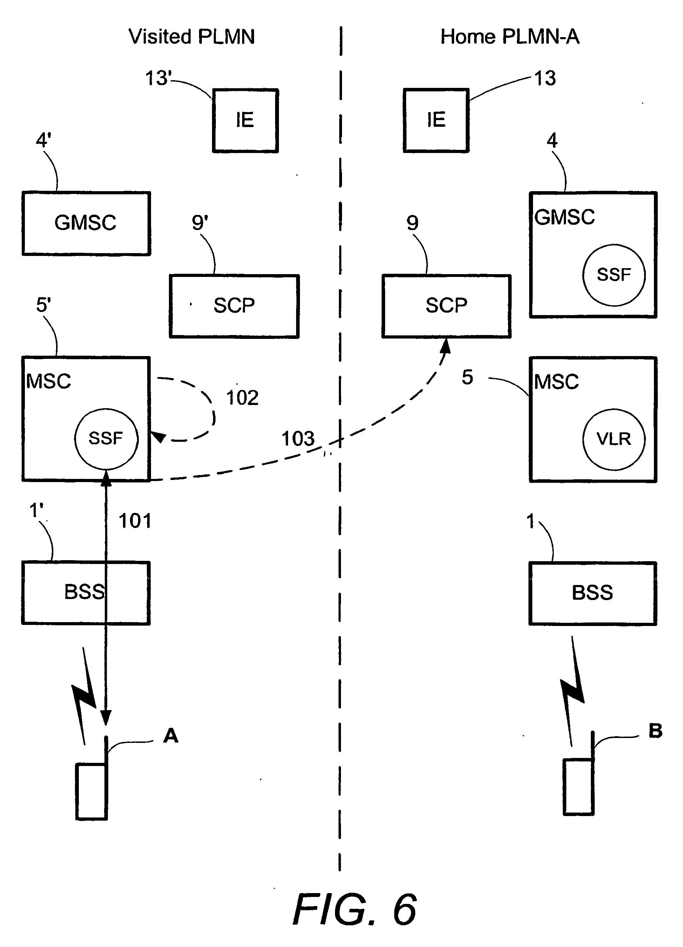

The method according to the present invention of facilitating service delivery to a first user registered with a home network for a particular service having an associated announcement accessible to a service subsystem of the home network HPLMN-A in a communications system, while the user is roaming in a visited network VPLMN of the communications system, is described in connection with a signalling diagram in FIG 5 and the combined signalling (dashed line) and data/voice (solid line) path diagrams in FIG 6-9.

The vertical bar to the left in FIG 5 represents the (G)MSC 4', 5' and its SSF of the visited network in FIGs 3 and 4. The bar in the middle represents the (G)MSC 4, 5 and its SSF in the home network, and the bar to the right represents the SCF in the SCP 9₁ of the home network.

With reference to FIG 6, a call is initiated from the user A - when he is roaming in the visited network - to a user B in the home network of user A in step 101. A dials the number e.g. +*46703102030* to B. The access signal reaches the MSC 5' that is serving A's mobile station (MSC-VPLMN). The MSC 5' checks the VLR for A's subscriber data and finds that O-CSI is active^{a} and that IN is needed. The traffic control subsystem of the MSC 5' in the VPLMN calls for IN assistance by passing an IN Service Trigger^{b} (IST) to the SSF in step 102. The datastructures described below is not defined in the standard and actual implementation may vary.
a. O-CSI may be set to on/off. If it is set to on, the O-CSI also indicates the service and the SCP for the service as follows: [on|service_key|SCP_address]
b. The IST includes O-CSI data, reason for the triggering and other data as follows: [trigger_type|service_key|SCP_address|.....]

The SSF of the MSC 5' in the visited network determines the relevant trigger table, based on the IST. Further, the SSF interrogates the SCF of the SCP 9 in the home network by sending an Initial DP (a CAMEL message), i.e. invokes a service in the SCF and provides call data to the SCF for the service in step 103.

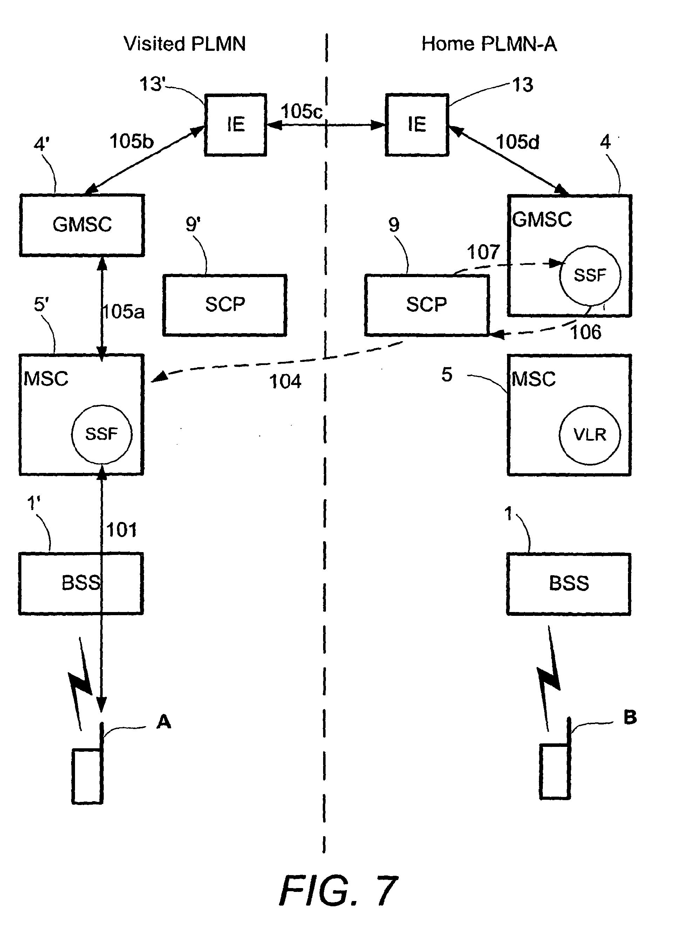

With reference to FIG 7, the prepaid IN logic in the SCP 9 starts to execute and checks for example that there is enough funds on the account to cover the cost of the call. In a case where A is running out of funds the announcement "*You have* 5 *dollars left*" should be played to the user. The SCF of the SCP 9 in the home network instructs the SSF of the MSC 5' in the visited network to set up a connection or couple to the (G)MSC 4 in the home network. That is, the SCP 9 passes the control and and instructs the SSF in the MSC 5' of the VPLMN to set up the call towards a predetermined special number in the HPLMN in step 104, this special number is denoted B*..

The SCP 9 also compiles data necessary to later retrieve call status, (CallStatusData). CallStatusData may include the type of service, e.g. prepaid, A-number, B-number, announcement reference and a call identity (call_id), which are transferred to the SSF of the MSC 5' in step 104.

In step 105a-d, the SSF of the MSC 5' in the visited network sets up a connection or couple to the SSF of the GMSC 4 in the home network via international exchanges 13',13, using the received B*-number and CallStatusData or call_id being transferred. When the GMSC 4 in the home network receives a call to the B*-number it detects this as a call requiring IN. This detection may be either coded in the GMSC 4/MSC 5 or the B*-number could be defined in the HLR/VLR as a subscription number requiring IN (O-CSI active). Anyhow the IN will be triggered analogous to step 102 above. This process is normally referred to as Number Based Triggering or in CAMEL as Serving Network Dialled Services.

Instead of passing CallStatusData in step 104, the necessary data can alternatively be saved in the SCP (or SDP Service Data Point) in step 103 and only the call_id is passed in the connect operation in step 104.

A problem is that some older international signalling schemes like for example CCITT No. 5 would remove not known information like the CallStatusData or call_id. A solution to this problem in the alternative where the call_id is sent is to use parts of the number space of the B*-number (normally 15 digits). One example could be <467039999 112233> where the 9999 is the HPLMN unique B*-number and 112233 is the call_id. A solution to further extend the address space for the call_id would be to use the over decadic TBCD (Telephony Binary Coded Digits) characters like * or #.

In the latter case, and when the B*-number is defined as Serving Network Dialled Service number in the HLR/VLR, the MSC/GMSC would have to detect that it is such a number so that the call_id may be removed before doing HLR/VLR database look up.

An Initial DP CAMEL message including the CallstatusData or call_id needed to restore the call state and continue service execution is also sent from the SSF of the GMSC 5 in the home network to the SCF of the SCP 9 in the home network in step 106. Other protocols than CAMEL, like CS1/ CS1+ can be used for intra-PLMN IN signalling in alternative embodiments of the invention.

The SCF in the home network instructs in step 107 the SSF in the home network to play or generate an announcement for the user over the connection (speech transmission channel) set up in step 105a-d. These and other not mentioned components operating in the delivery of a service and an associated announcement are referred to as the service subsystem. If the SSF and SRF are co-located, the SCP instructs the SSF to connect to the Service Resource Function SRF 14, an announcement machine in this embodiment, by sending the (CAMEL) operation ConnectToResource. The SCP then uses the (CAMEL) operation PlayAnnouncement to order the SSF to order the announcement to be played. If the SRF is standalone it would normally have a so called assisting SSF. In the standalone case the SCP would directly connect to the SRF.

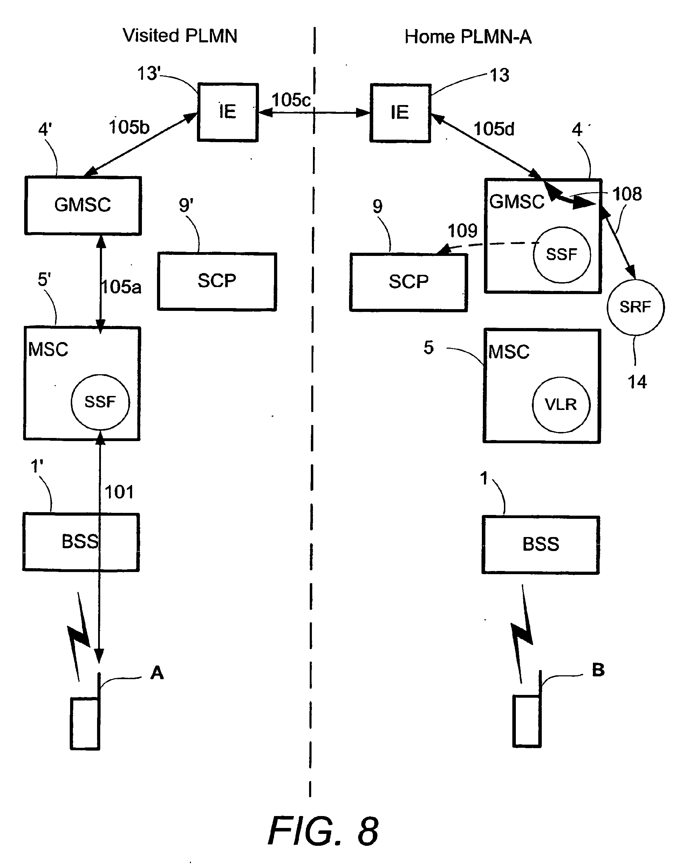

With reference to FIG 8, the SSF of the GMSC 4 instructs the traffic control system to connect the announcement machine and the announcement is played to A in step 108. Then, the SRF 14 in the home network plays the announcement, transparently through the MSC 5' in the visited network, via the speech transmission channel further to the user A.

The SSF surveys the announcement and is notified when the announcement is played and the connection is closed. When this occurs the SSF notifies the SCP about the event with the (CAMEL) operation SpecializedResourceReport in step 109. This report may be omitted by instead using for example a timer to track when the announcement have been played.

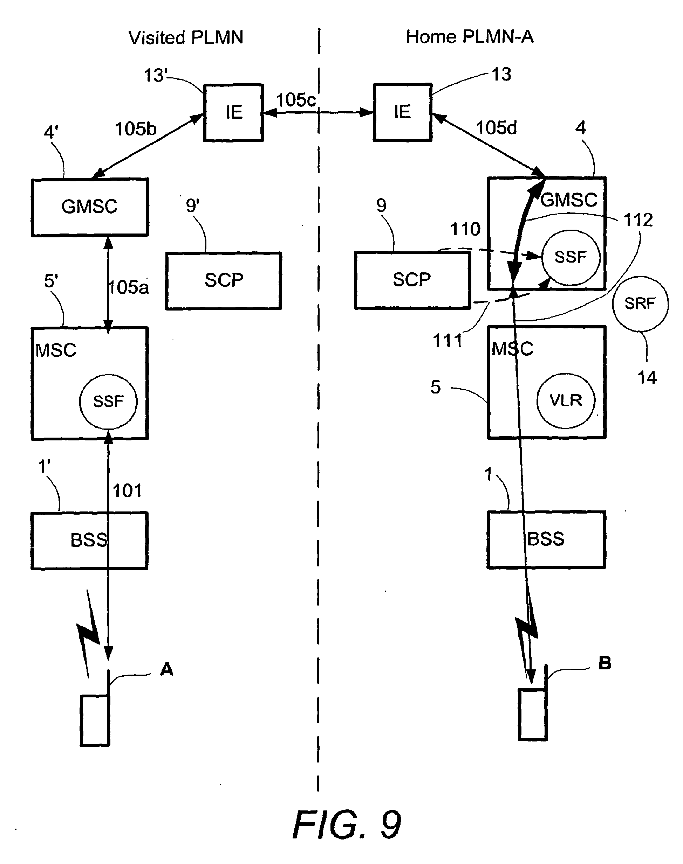

Referring now to FIG 9, the SCP 9 instructs the SSF of the GMSC 4 in the home network to disconnect from the SRF or the announcement machine by sending CAMEL operation *DisconnectForwardConnection* in step 110.

The disconnection may also be done implicit at end of announcement by the SRF or by the SSF. Next, the SCP 9 instructs the SSF to connect the call to B using the (CAMEL) operation *Connect* in step 111. The connection already set up between the SSF of the MSC 5' in the visited network and the SSF of the GMSC 4 in the home network for the initiated call from the user A to user B is redirected to the user B.

The SSF sets up the call leg to B and connects the incoming and outgoing legs in step 112.

The call is surveyed and finally torn down according to known GSM/IN/ Prepaid principles and is not further described here.

The method of the present invention is preferably implemented in computer software executable preferably by a distributed data processing system forming part of the overall communication system. More specifically, the service subsystem forms part of the SCP and the SCF and is either a separate data processing system or is a subsystem of the overall communication system for communication with other devices, components or data processing system/s in the communication system of the network. In one embodiment of the data processing system according to the invention it comprises a computer processor for processing data, and a storage connected to the computer processor for storing data on a storage medium.

In this embodiment of the invention, the computer processor of the service subsystem in the home network is configured to receive information identifying the presence of the user in the visited network and information for initiating a connection from a first user to a second user registered with any network of the communications system. The data processing system is further configured to establish a connection with the first user on request for delivery of an announcement to the first user under a couple, and establish a connection between the first and second user during the same couple. The announcement can be delivered either before the connection is established between the first and second user or even during an already established connection.

It should be apparent that the present invention provides an improved method and system for use in an electronic communication network, providing real-time updating of available network service access for stations connected to the network, and necessary functionality for a pre/post-paid system, that fully satisfies the aims and advantages set forth above. Although the invention has been described in conjunction with a specific embodiment thereof, this invention is susceptible of embodiments in different forms.

Although the method is described in conjunction with a mobile telephone call in an intelligent network the method is applicable on any communication session and other communication services in other kind of networks. For example, the method and system according to the invention are applicable in other mobile telephone networks, public switched telecommunications networks (PSTN), ISDN, ATM, Internet etc., which provide many different more or less sophisticated tele and data communications services for users and providers.

Further, not just announcements is handled by the method and system according to the invention, but any service requiring assist from a Service Resource Point/Function.

The services is not limited to beginning of call, but could also be in-call or at end of call within the scope of the invention.

## Claims

1. A method of facilitating service delivery to a first user (A) registered with a home network (home PLMN) for a particular service having an associated announcement accessible to a service subsystem (4,9) of said home network in a communications system while the first user (A) is roaming in a visited network (visited PLMN) of the communications system, wherein
a connection is initiated between said first user (A) and a second user (B) registered with any network of said communications system (101,102),
**characterised by** the further steps of:
a subsystem (5') of said visited network, sending an invocation of said particular service to said service subsystem (9) of said home network (103),
said service subsystem (5,9) of said home network instructing said subsystem (5') of the visited network to set up a connection between the first user (A) via said subsystem (5') of the visited network to the service subsystem (5,9) of the home network (104),
setting up said connection (105),
delivering the associated announcement to the first user via said connection (106,107,108),
disconnecting the delivery of said associated announcement (109,110), and
redirecting said connection from said first user (A) to said second user (B) (111,112).

2. A method according to claim 1,
wherein the method comprises- before the step of instructing said subsystem (5') of the visited network to set up a connection,_the further step of establishing call status data necessary for re-establishment of call state of said service subsystem (9).

3. A method according to claim 1 or 2,
wherein the method comprises after the step of setting up said connection (105) the further step of the home network (home PLMN) detecting the connection as a connection requiring Intelligent Network service.

4. A method according to claim 3, **characterised in that** said detection is performed by a call to a specific number.

5. A method according to claim 2, **characterised by** the further step of:
storing said call status data in a storage of said service subsystem (5,9) (103).

6. A method according to claim 5, wherein the method comprises, after the step of setting up said connection (105), the further step of retrieving said stored call status data of said connection from said memory means for use in delivering said service.

7. A method according to any of the preceding claims, wherein the steps of instructing said subsystem (5') of the visited network to set up a connection (104), and setting up said connection (105), include the transfer of a call identity of said initiated connection.

8. A method according to claim 2, wherein the steps of instructing said subsystem (5') of the visited network to set up a connection (104), and setting up said connection (105), include the transfer of said call status data.

9. A method according to claim 8, **characterised by** the further step of:
using said call status data to re-establish call state of said connection.

10. A method according to any of the claims 2-9, wherein the call status data comprises the type of service, A-number, and B-number.

11. A method according to any of the claims 4-10, wherein the call identity is a part of said specific number.

12. A method according to any of the preceding claims, wherein said second user (B) is identified as being within said home network of said first user (A).

13. A data processing system for use in a service subsystem (9) of an electronic communication system facilitating service delivery to a first user (A) registered with a home network (home PLMN) for a particular service having an associated announcement accessible to said service subsystem (4,9) of said home network in said communications system while the user is roaming in a visited network (visited PLMN) of the communications system, wherein a connection is initiated between said first user (A) and a second user (B) registered with any network of said communications system (101, 102), the data processing system comprising computer processing means for processing data, and storage means connected to said computer processing means for storing data on a storage medium,
**characterised in that** said computer processing means of said service subsystem (9) of said home network is configured to
receive an invocation of said particular service from a subsystem (5') of said visited network,
instruct said subsystem (5') of the visited network to set up a connection between the first user (A) via said subsystem (5') of the visited network to the service subsystem (5,9) of the home network (104),
deliver the associated announcement to the first user via said connection (106,107),
disconnect the delivery of said associated announcement (109,110), and
redirect said connection from said first user (A) to said second user (B) (111,112).

14. A data processing system according to claim 13, wherein said communications system is a mobile communications system.

## Patentansprüche

1. Verfahren zum Erleichtern einer Dienstlieferung zu einem ersten Benutzer (A), der bei einem Heimatnetz (einem Heimat-PLMN) für einen speziellen Dienst registriert ist, der eine zugeordnete Benachrichtigung hat, die für ein Dienst-Teilsystem (4, 9) des Heimatnetzes in einem Kommunikationssystem zugänglich ist, während sich der erste Benutzer (A) in einem besuchten Netz (einem besuchten PLMN) des Kommunikationssystems bewegt, wobei
eine Verbindung zwischen dem ersten Benutzer (A) und einem zweiten Benutzer (B), der bei einem Netz des Kommunikationssystems (101, 102) registriert ist, eingeleitet wird,
**gekennzeichnet durch** folgende weitere Schritte:
Senden (103) eines Aufrufs des speziellen Dienstes zu dem Dienst-Teilsystem (9) des Heimatnetzes **durch** ein Teilsystem (5') des besuchten Netzes,
Anweisen (104) des Teilsystems (5') des besuchten Netzes durch das Dienst-Teilsystem (5, 9) des Heimatnetzes, über das Teilsystem (5') des besuchten Netzes eine Verbindung zwischen dem ersten Benutzer (A) und dem Dienst-Teilsystem (5, 9) des Heimatnetzes herzustellen,
Herstellen (105) der Verbindung,
Liefern (106, 107, 108) der zugeordneten Benachrichtigung zu dem ersten Benutzer über die Verbindung,
Unterbrechen (109, 110) der Lieferung der zugeordneten Benachrichtigung, und
Umleiten (111, 112) der Verbindung von dem ersten Benutzer (A) zu dem zweiten Benutzer (B).

2. Verfahren nach Anspruch 1,
wobei das Verfahren vor dem Schritt des Anweisens des Teilsystems (5') des besuchten Netzes, eine Verbindung herzustellen, den weiteren Schritt eines Einrichtens von Anrufstatusdaten, die für eine Neueinrichtung eines Anrufzustands des Dienst-Teilsystems (9) notwendig sind, aufweist.

3. Verfahren nach Anspruch 1 oder 2, wobei das Verfahren nach dem Schritt des Herstellens (105) der Verbindung den weiteren Schritt eines Erfassens der Verbindung durch das Heimatnetz (das Heimat-PLMN) als eine Verbindung, die einen Dienst eines Intelligenten Netzes erfordert, aufweist.

4. Verfahren nach Anspruch 3, **dadurch gekennzeichnet, dass** die Erfassung durch einen Anruf zu einer spezifischen Nummer durchgeführt wird.

5. Verfahren nach Anspruch 2, **gekennzeichnet durch** folgenden weiteren Schritt:
Speichern (103) der Anrufstatusdaten in einem Speicher des Dienst-Teilsystems (5, 9).

6. Verfahren nach Anspruch 5, wobei das Verfahren nach dem Schritt des Herstellens (105) der Verbindung den weiteren Schritt eines Wiedergewinnens der gespeicherten Anrufstatusdaten der Verbindung aus der Speichereinrichtung für eine Verwendung bei dem Liefern des Dienstes aufweist.

7. Verfahren nach einem der vorhergehenden Ansprüche, bei dem die Schritte des Anweisens (104) des Teilsystems (5') des besuchten Netzes, eine Verbindung herzustellen, und des Herstellens (105) der Verbindung die Übertragung einer Anrufidentität der eingeleiteten Verbindung umfassen.

8. Verfahren nach Anspruch 2, bei dem die Schritte des Anweisens (104) des Teilsystems (5') des besuchten Netzes, eine Verbindung herzustellen, und des Herstellens (105) der Verbindung die Übertragung der Anrufstatusdaten umfassen.

9. Verfahren nach Anspruch 8, **gekennzeichnet durch** folgenden weiteren Schritt:
Verwenden der Anrufstatusdaten, um einen Anrufzustand der Verbindung neu einzurichten.

10. Verfahren nach einem der Ansprüche 2-9, bei dem die Anrufstatusdaten den Typ eines Dienstes, die A-Nummer und die B-Nummer aufweisen.

11. Verfahren nach einem der Ansprüche 4-10, bei dem die Anrufidentität ein Teil der spezifischen Nummer ist.

12. Verfahren nach einem der vorhergehenden Ansprüche, bei dem der zweite Benutzer (B) als innerhalb des Heimatnetzes des ersten Benutzers (A) befindlich identifiziert wird.

13. Datenverarbeitungssystem für eine Verwendung in einem Dienst-Teilsystem (9) eines elektronischen Kommunikationssystems, das eine Dienstlieferung zu einem ersten Benutzer (A) erleichtert, der bei einem Heimatnetz (einem Heimat-PLMN) für einen speziellen Dienst registriert ist, der eine zugeordnete Benachrichtigung hat, die für das Dienst-Teilsystem (4, 9) des Heimatnetzes in dem Kommunikationssystem zugänglich ist, während sich der Benutzer in einem besuchten Netz (einem besuchten PLMN) des Kommunikationssystems bewegt, wobei eine Verbindung zwischen dem ersten Benutzer (A) und einem zweiten Benutzer (B), der bei einem Netz des Kommunikationssystems (101, 102) registriert ist, eingeleitet wird, wobei das Datenverarbeitungssystem eine Computerverarbeitungseinrichtung zum Verarbeiten von Daten und eine Speichereinrichtung, die mit der Computerverarbeitungseinrichtung verbunden ist, zum Speichern von Daten auf einem Speichermedium aufweist,
**dadurch gekennzeichnet, dass** die Computerverarbeitungseinrichtung des Dienst-Teilsystems (9) des Heimatnetzes konfiguriert ist, um
einen Aufruf des speziellen Dienstes von einem Teilsystem (5') des besuchten Netzes zu empfangen,
das Teilsystem (5') des besuchten Netzes anzuweisen, über das Teilsystem (5') des besuchten Netzes eine Verbindung zwischen dem ersten Benutzer (A) und dem Dienst-Teilsystem (5, 9) des Heimatnetzes herzustellen (104),
über die Verbindung die zugeordnete Benachrichtigung zu dem ersten Benutzer zu liefern (106, 107),
die Lieferung der zugeordneten Benachrichtigung zu unterbrechen (109, 110), und
die Verbindung von dem ersten Benutzer (A) zu dem zweiten Benutzer (B) umzuleiten (111, 112).

14. Datenverarbeitungssystem nach Anspruch 13, bei dem das Kommunikationssystem ein Mobilkommunikationssystem ist.

## Revendications

1. Procédé destiné à faciliter la fourniture d'un service à un premier utilisateur (A) enregistré auprès d'un réseau de rattachement (réseau RMTP de rattachement) pour un service particulier ayant une annonce associée accessible à un sous-système de desserte (4, 9) dudit réseau de rattachement dans un système de communication, tandis que le premier utilisateur (A) se déplace dans un réseau visité (réseau RMTP de visite) du système de communication,
dans lequel une connexion est lancée entre ledit premier utilisateur (A) et un second utilisateur (B) enregistré auprès d'un réseau quelconque dudit système de communication (101, 102),
**caractérisé en outre par** les étapes consistant à :
faire envoyer par un sous-système (5') dudit réseau visité une invocation dudit service particulier audit sous-système de desserte (9) dudit réseau de rattachement (103) ;
faire ordonner par ledit sous-système de desserte (5, 9) dudit réseau de rattachement audit sous-système (5') du réseau visité d'établir une connexion entre le premier utilisateur (A), via ledit sous-système (5') du réseau visité, et le sous-système de desserte (5, 9) du réseau de rattachement (104) ;
établir ladite connexion (105) ;
acheminer l'annonce associée au premier utilisateur, via ladite connexion (106, 107, 108) ;
déconnecter l'acheminement de ladite annonce associée (109, 110) ; et
rediriger ladite connexion entre ledit premier utilisateur (A) et ledit second utilisateur (B) (111, 112).

2. Procédé selon la revendication 1, dans lequel le procédé comprend en outre, avant l'étape ordonnant audit sous-système (5') du réseau visité d'établir une connexion, l'étape consistant à établir des données d'état de l'appel nécessaires pour le rétablissement de l'état d'appel dudit sous-système de desserte (9).

3. Procédé selon la revendication 1 ou 2, dans lequel le procédé comprend en outre, après l'étape d'établissement de ladite connexion (105), l'étape consistant à faire détecter par le réseau de rattachement (réseau RMTP de rattachement) que la connexion est une connexion exigeant un service de réseau intelligent.

4. Procédé selon la revendication 3, **caractérisé en ce que** ladite détection est exécutée par un appel à un numéro spécifique.

5. Procédé selon la revendication 2, **caractérisé en outre par** l'étape consistant à :
stocker lesdites données d'état de l'appel dans un moyen de stockage dudit sous-système de desserte (5, 9) (103).

6. Procédé selon la revendication 5, dans lequel le procédé comprend en outre, après l'étape d'établissement de ladite connexion (105), l'étape consistant à relire dans ledit moyen de mémoire lesdites données d'état de l'appel mémorisées sur ladite connexion afin de les utiliser dans la fourniture dudit service.

7. Procédé selon l'une quelconque des revendications précédentes, dans lequel les étapes consistant à ordonner audit sous-système (5') du réseau visité d'établir une connexion (104) et à établir ladite connexion (105), incluent le transfert d'une identité de l'appel pour ladite connexion initiée.

8. Procédé selon la revendication 2, dans lequel les étapes consistant à ordonner audit sous-système (5') du réseau visité d'établir une connexion (104) et à établir ladite connexion (105), incluent le transfert desdites données d'état de l'appel.

9. Procédé selon la revendication 8, **caractérisé en outre par** l'étape consistant à :
utiliser lesdites données d'état de l'appel pour rétablir l'état d'appel de ladite connexion.

10. Procédé selon l'une quelconque des revendications 2 à 9, dans lequel les données d'état de l'appel comprennent le type de service, le numéro A et le numéro B.

11. Procédé selon l'une quelconque des revendications 4 à 10, dans lequel l'identité de l'appel est une partie dudit numéro spécifique.

12. Procédé selon l'une quelconque des revendications précédentes, dans lequel ledit second utilisateur (B) est identifié comme se situant dans ledit réseau de rattachement dudit premier utilisateur (A).

13. Système de traitement de données destiné à être utilisé dans un sous-système de desserte (9) d'un système de communication électronique facilitant la fourniture d'un service à un premier utilisateur (A) enregistré auprès d'un réseau de rattachement (réseau RMTP de rattachement) pour un service particulier ayant une annonce associée accessible audit sous-système de desserte (4, 9) dudit réseau de rattachement dans ledit système de communication, tandis que l'utilisateur se déplace dans un réseau visité (réseau RMTP de visite) du système de communication, dans lequel une connexion est lancée entre ledit premier utilisateur (A) et un second utilisateur (B) enregistré auprès d'un réseau quelconque dudit système de communication (101, 102), le système de traitement de données comprenant un moyen de traitement informatique destiné à traiter des données et un moyen de stockage connecté audit moyen de traitement informatique, afin de stocker des données sur un support de stockage,
**caractérisé en ce que** ledit moyen de traitement informatique dudit sous-système de desserte (9) dudit réseau de rattachement est configuré pour :
recevoir une invocation dudit service particulier en provenance d'un sous-système (5') dudit réseau visité ;
ordonner audit sous-système (5') du réseau visité d'établir une connexion entre le premier utilisateur (A), via ledit sous-système (5') du réseau visité, et le sous-système de desserte (5, 9) du réseau de rattachement (104) ;
acheminer l'annonce associée au premier utilisateur, via ladite connexion (106, 107) ;
déconnecter l'acheminement de ladite annonce associée (109, 110) ; et
rediriger ladite connexion entre ledit premier utilisateur (A) et ledit second utilisateur (B) (111, 112).

14. Système de traitement de données selon la revendication 13, dans lequel ledit système de communication est un système de communication mobile.
